# EUROPEAN PATENT APPLICATION

(11) **EP 4 530 086 A1**
(43) Date of publication of application: **02.04.2025**
(21) Application number: 23811781.6
(22) Date of filing: 22.05.2023
(51) Int. Cl.: B41M 5/26, B41M 5/28, B41M 5/30, B41M 5/44

(54) **HEAT-SENSITIVE RECORDING MATERIAL**

(30) Priority: 23.05.2022 JP 2022083739
(71) Applicant: Oji Holdings Corporation, Chuo-ku Tokyo 104-0061 (JP)
(72) Inventor: AKIMOTO, Shinya, Tokyo 104-0061 (JP); AOYAMA, Shigeo, Tokyo 104-0061 (JP)
(74) Representative: Müller-Boré & Partner Patentanwälte PartG mbB
(86) International application number: PCT/JP2023/018982
(87) International publication number: WO 2023/228909

(57) **Abstract**

Disclosed is a heat-sensitive recording material comprising the following: a support having at least one colored surface; and a light-scattering layer on the colored surface, wherein the light-scattering layer contains hollow polymer particles and a clarifying agent, the content of the hollow polymer particles is 6 to 35 mass% based on the total solids content of the light-scattering layer, the content of the clarifying agent is 1 part by mass or more, on a solids basis, per part by mass of the hollow polymer particles, and the light-scattering layer is substantially free of a dye precursor and a color developer, and wherein A) the clarifying agent consists of a fatty acid amide, or B) the clarifying agent comprises a combination of a fatty acid amide and at least one member selected from the group consisting of a compound represented by the following formula (1) and 1,2-bis(phenoxymethyl)benzene; 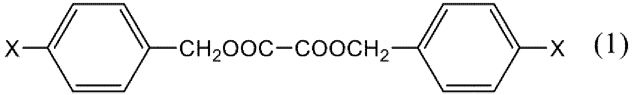 wherein in the formula, Xs are the same or different, and each represents CH₃ or Cl.

## Description

### Technical Field

The present invention relates to a heat-sensitive recording material.

### Background Art

Heat-sensitive recording materials, which are in wide practical use, record color images by taking advantage of a heat-induced color development reaction between a colorless or pale-colored dye precursor and a phenol or an organic acid. Such heat-sensitive recording materials have advantages in that, for example, color images can be formed simply by the application of heat, and further, recording devices for these can be compact, can be easily maintained, and generate less noise. For this reason, heat-sensitive recording materials have been used in a broad range of technical fields as information-recording materials for printing devices such as label printers, ticket vending machines, CDs, ATMs, order form output devices for use in restaurants etc., data output devices in apparatuses for scientific research, etc.

Examples of heat-sensitive recording materials other than such heat-sensitive recording materials that take advantage of a color development reaction between a dye precursor and a developer include the heat-sensitive recording material reported in PTL 1.

PTL 1 reports a recording material comprising a) a support comprising at least one colored surface and b) a layer arranged thereon, the layer comprising polymer particles having a core/shell structure and 1 wt% to 90 wt% based on the weight of the polymer particles, of an opacity reducer having a melting point of 45°C to 200°C, wherein the particles have an outer first polymer shell having a calculated Tg of 40°C to 130°C, and the particles comprise, when dry, at least one void.

In this heat-sensitive recording material, the colored surface is concealed with an opaque layer, and when the opacity reducer is melted by heat, the layer on the colored surface becomes transparent, making the colored surface visible and thus making printing possible.

However, conventional heat-sensitive recording materials that are substantially free of a dye precursor and a developer are insufficient in terms of whiteness, color density, oil resistance, and printability, and have room for improvement.

### Citation List

### Patent Literature

PTL 1: JP2014-512290A

### Summary of Invention

### Technical Problem

A primary object of the present invention is to provide a heat-sensitive recording material that is substantially free of a dye precursor and a developer, and that has excellent whiteness, color density, oil resistance, and printability.

### Solution to Problem

In order to solve the above problem, the present inventors conducted extensive research and found that the above problem can be solved by blending 6 to 35 mass% of hollow polymer particles in a light-scattering layer, blending 1 part by mass or more of a clarifying agent per part by mass of the hollow polymer particles, and using a fatty acid amide alone or in combination with a specific compound as the clarifying agent. The present invention has thus been completed. Specifically, the present invention relates to the following heat-sensitive recording material.

### Item 1.

A heat-sensitive recording material comprising:
a support having at least one colored surface; and
a light-scattering layer on the colored surface,
wherein
the light-scattering layer contains hollow polymer particles and a clarifying agent, the content of the hollow polymer particles is 6 to 35 mass% based on the total solids content of the light-scattering layer, the content of the clarifying agent is 1 part by mass or more, on a solids basis, per part by mass of the hollow polymer particles, and the light-scattering layer is substantially free of a dye precursor and a color developer, and
wherein
   A) the clarifying agent consists of a fatty acid amide, or
   B) the clarifying agent comprises a combination of a fatty acid amide and at least one member selected from the group consisting of a compound represented by the following formula (1) and 1,2-bis(phenoxymethyl)benzene; 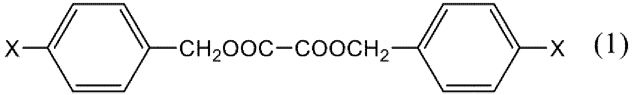
wherein in the formula, Xs are the same or different, and each represents CH₃ or Cl.

### Item 2.

The heat-sensitive recording material according to Item 1, wherein the content of the clarifying agent is 20 to 35 mass% based on the total solids content of the light-scattering layer.

### Item 3.

The heat-sensitive recording material according to Item 1 or 2, wherein the content of the hollow polymer particles is 20 to 30 mass% based on the total solids content of the light-scattering layer.

### Item 4.

The heat-sensitive recording material according to any one of Items 1 to 3, wherein the light-scattering layer further contains non-hollow polymer particles, and the content of the non-hollow polymer particles is 10 to 45 mass% based on the total solids content of the light-scattering layer.

### Item 5.

The heat-sensitive recording material according to Item 4, wherein the non-hollow polymer particles have an average particle diameter of 0.4 to 2.0 µm.

### Item 6.

The heat-sensitive recording material according to any one of Items 1 to 5, wherein the fatty acid amide comprises at least one member selected from the group consisting of stearic acid amide and palmitic acid amide.

### Advantageous Effects of Invention

The heat-sensitive recording material of the present invention is a heat-sensitive recording material that is substantially free of a colorant precursor and a developer, and that has excellent whiteness, color density, oil resistance, and printability.

### Description of Embodiments

In the present specification, the expression "comprise" or "contain" includes the concepts of comprising, consisting essentially of, and consisting of.

In the present specification, a numerical range indicated by "... to ..." means a range including the numerical values given before and after "to" as the lower limit and the upper limit.

"Latex" as used herein includes one in the form of a gel or dry film formed by drying a dispersion medium.

In the present invention, the average particle diameter refers to a median diameter on a volumetric basis as measured by laser diffractometry. More simply, the average particle diameter may also be indicated by the average value of the particle diameter of 10 particles measured from a particle image (SEM image) of an electron microscope.

The present invention provides a heat-sensitive recording material comprising:
a support having at least one colored surface; and
a light-scattering layer on the colored surface,
wherein
the light-scattering layer contains hollow polymer particles and a clarifying agent, the content of the hollow polymer particles is 6 to 35 mass% based on the total solids content of the light-scattering layer, the content of the clarifying agent is 1 part by mass or more, on a solids basis, per part by mass of the hollow polymer particles, and the light-scattering layer is substantially free of a dye precursor and a color developer, and
wherein
   A) the clarifying agent consists of a fatty acid amide, or
   B) the clarifying agent comprises a combination of a fatty acid amide and at least one member selected from the group consisting of a compound represented by the following formula (1) and 1,2-bis(phenoxymethyl)benzene. 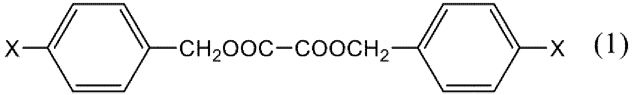
In the formula above, Xs are the same or different, and each represents CH₃ or Cl.

### Support

The support in the present invention is not particularly limited in type, shape, dimension, or the like. For example, high-quality paper (acid paper, neutral paper), medium-quality paper, coated paper, art paper, cast-coated paper, glassine paper, resin laminate paper, polyolefin-based synthetic paper, synthetic fiber paper, nonwoven fabrics, synthetic resin films, various transparent supports, or the like can be appropriately selected and used. In an embodiment of the present invention, the support may have a colored surface on one surface or may be colored on both surfaces. The color may be imparted, for example, by pigments, dyes, or the inherent color of the support. Alternatively, the support may be immersed in a colorant to provide a colored surface. The thickness of the support is not particularly limited, and is typically about 20 to 200 µm. The density of the support is not particularly limited, and is preferably about 0.60 to 0.85 g/cm³.

### Colored Surface

The heat-sensitive recording material of the present invention has at least one colored surface on the support. Due to the presence of the colored surface, printing is made possible when the light-scattering layer becomes transparent by heat.

The support may have a colored surface on one surface or on both surfaces. The colored surface is not limited as long as it has sufficient color density that is visibly contrasting to the light-scattering layer arranged on the surface. The colored surface may be uniform or varied in color density or may be patterned. The color of the colored surface is also not particularly limited and may be any color.

The colored surface may be a colored layer formed on the support. The colored layer may contain a colorant for imparting color, such as a dye, a pigment, and carbon black. The content of the colorant can be selected from a wide range, and is typically preferably about 5 to 50 mass%, more preferably about 7 to 30 mass%, based on the total solids content of the colored layer.

The colored layer may contain a pigment other than the colorant. Examples of pigments include inorganic pigments, such as calcium carbonate, magnesium carbonate, kaolin, calcined kaolin, clay, talc, calcined clay, silica, diatomaceous earth, synthetic aluminum silicate, zinc oxide, titanium oxide, aluminum hydroxide, barium sulfate, surface-treated calcium carbonate, and silica; hollow polymer particles; non-hollow polymer particles; and the like. The content of the pigment can be selected from a wide range, and is typically preferably about 30 to 80 mass%, and more preferably about 40 to 70 mass%, based on the total solids content of the colored layer.

The colored layer is typically formed by mixing and stirring a colorant, a pigment other than the colorant, a binder, an auxiliary agent, and the like to prepare a coating liquid for a colored layer using water as a medium, and then applying the coating liquid to the support, followed by drying. The coated amount of the coating liquid for a colored layer is not particularly limited, and is preferably about 2 to 15 g/m², and more preferably about 3 to 10 g/m² in terms of dry mass.

Examples of binders include water-soluble polymeric materials, such as polyvinyl alcohol and derivatives thereof, starch and derivatives thereof, cellulose derivatives, such as hydroxymethylcellulose, hydroxyethylcellulose, hydroxypropylcellulose, carboxymethylcellulose, methylcellulose, and ethylcellulose, sodium polyacrylate, polyvinylpyrrolidone, acrylamide-acrylic acid ester copolymers, acrylamide-acrylic acid ester-methacrylic acid ester copolymers, styrene-maleic anhydride copolymers, isobutylene-maleic anhydride copolymers, casein, gelatin, and derivatives thereof; emulsions, such as polyvinyl acetate, polyurethane, polyacrylic acid, polyacrylic acid ester, vinyl chloride-vinyl acetate copolymers, polybutyl methacrylate, and ethylene-vinyl acetate copolymers; latexes of water-insoluble polymers, such as styrene-butadiene copolymers and styrene-butadiene-acrylic copolymers; and the like. The content of the binder can be selected from a wide range, and is typically preferably about 5 to 40 mass%, and more preferably about 10 to 30 mass%, based on the total solids content of the colored layer.

### Light-scattering Layer

The heat-sensitive recording material of the present invention comprises a light-scattering layer on the colored surface. The light-scattering layer contains hollow polymer particles and a clarifying agent. The light-scattering layer is substantially free of a dye precursor and a developer.

### Hollow Polymer Particles

Due to the presence of hollow polymer particles, light scattering occurs in the light-scattering layer, making it possible to conceal the colored surface.

The hollow polymer particles can be divided into foamed and non-foamed types depending on the production method. Of these two types, foamed hollow polymer particles typically have a larger average particle diameter and a higher hollow ratio than non-foamed hollow polymer particles.

Non-foamed hollow polymer particles can be produced by polymerizing a seed in a solution, polymerizing another resin so as to cover the seed, and removing the seed inside by swelling and dissolving to form a void inside. An alkaline aqueous solution or the like is used to remove the seed inside by swelling and dissolving. Non-foamed hollow particles with a relatively small average particle diameter can also be produced by alkaline swelling treatment of core-shell particles in which core particles having alkaline swelling properties are coated with a shell layer that does not have alkaline swelling properties.

Foamed hollow polymer particles can be produced by preparing particles in which a volatile liquid is sealed in a resin, and vaporizing and expanding the liquid in the particles while softening the resin by heating.

The hollow ratio of the hollow polymer particles is, for example, about 30 to 99%. The hollow ratio as used herein is a value that is determined according to the following formula: (d³/D³)×100. In the formula, d represents the inner diameter of the hollow polymer particles, and D represents the outer diameter of the hollow polymer particles.

The average particle diameter of the hollow polymer particles in the present invention is preferably 0.2 to 5.0 µm, and more preferably 0.4 to 2.0 µm. The average particle diameter as used herein is the diameter at which the volume of larger particles is equal to the volume of smaller particles when particles are divided into two kinds based on the particle diameter, i.e., the median diameter, which is the particle diameter corresponding to 50 volume% frequency. The average particle diameter is also referred to as "D50." The average particle diameter (D50) of the hollow polymer particles can be measured using a laser diffraction particle diameter distribution analyzer. The average particle diameter may also be indicated by the average value of the particle diameter of 10 particles measured from a particle image (SEM image) of an electron microscope.

The content of the hollow polymer particles in the present invention is 6 to 35 mass%, preferably 10 to 30 mass%, and more preferably 20 to 30 mass%, based on the total solids content of the light-scattering layer. A content of the hollow polymer particles of 6 mass% or more can improve whiteness and oil resistance. On the other hand, a content of the hollow polymer particles of 35 mass% or less can increase color density and also improve printability.

### Clarifying Agent

Due to the presence of a clarifying agent, when heat is applied, the clarifying agent undergoes melting, and the refractive index of the light-scattering layer changes, allowing the light-scattering layer to become transparent and the colored surface to become visible.

The clarifying agent is either of the following:
A) the clarifying agent consists of a fatty acid amide, or
B) the clarifying agent comprises a combination of a fatty acid amide and at least one member selected from the group consisting of a compound represented by formula (1) and 1,2-bis(phenoxymethyl)benzene. This configuration can increase the contrast between the transparent and non-transparent portions, and improve printability.

Examples of fatty acid amides include myristic acid amide, palmitic acid amide, stearic acid amide, arachidic acid amide, behenic acid amide, and the like. Of these, stearic acid amide and palmitic acid amide are preferred from the viewpoint of excellent printability, and combined use of stearic acid amide and palmitic acid amide is particularly preferred to increase color density. Of course, fatty acid amides are not limited to these, and two or more compounds may be used in combination as necessary.

The compound represented by formula (1) is not particularly limited, and may be at least one member selected from the group consisting of oxalic acid-di-p-chlorobenzyl ester and oxalic acid-di-p-methylbenzyl ester.

The content of the clarifying agent is not particularly limited, and is preferably about 20 to 35 mass%, and more preferably about 25 to 30 mass%, based on the total solids content of the light-scattering layer. A content of 20 mass% or more can increase color density. A content of 35 mass% or less can increase color density and also improve printability.

The content of the clarifying agent is 1 part by mass or more per part by mass of the hollow polymer particle. In the case of A) above, the content of the clarifying agent is preferably 3.5 parts by mass or less, more preferably 2.5 parts by mass or less, and even more preferably 1.5 parts by mass or less, per part by mass of the hollow polymer particles. On the other hand, in the case of B) above, the content of the clarifying agent is preferably 4 parts by mass or less, more preferably 3 parts by mass or less, and even more preferably 2 parts by mass or less, per part by mass of the hollow polymer particles. A content of 1 part by mass or more can increase color density.

### Non-hollow Polymer Particles

The light-scattering layer in the present invention can contain non-hollow polymer particles. The presence of non-hollow polymer particles can increase whiteness.

Resins that can be used for the non-hollow polymer particles typically include acrylic resins and polystyrene resins. In particular, styrene-acrylic copolymers are preferred.

The average particle diameter of the non-hollow polymer particles in the present invention is preferably 0.4 to 2.0 µm, and more preferably 0.6 to 1.5 µm. The average particle diameter as used herein is the diameter at which the volume of larger particles is equal to the volume of smaller particles when particles are divided into two kinds based on the particle diameter, i.e., the median diameter, which is the particle diameter corresponding to 50 volume% frequency. The average particle diameter is also referred to as "D50." The average particle diameter (D50) of the non-hollow polymer particles can be measured using a laser diffraction particle diameter distribution analyzer. The average particle diameter may also be indicated by the average value of the particle diameter of 10 particles measured from a particle image (SEM image) of an electron microscope. An average particle diameter of the non-hollow polymer particles of 0.4 to 2.0 µm can improve whiteness of the heat-sensitive recording material.

The content of the non-hollow polymer particles in the present invention is preferably 10 to 45 mass%, more preferably 15 to 35 mass%, and even more preferably 20 to 30 mass%, based on the total solids content of the light-scattering layer. A content of the non-hollow polymer particles of 10 mass% or more can improve whiteness of the heat-sensitive recording material. On the other hand, a content of the non-hollow polymer particles of 45 mass% or less can increase color density.

Other components used for constituting the light-scattering layer include a binder. Further, auxiliary agents, such as crosslinking agents, lubricants, water resistance improving agents, and dispersants, may be used, if necessary.

Examples of binders include water-soluble polymeric materials, such as polyvinyl alcohol and derivatives thereof, starch and derivatives thereof, cellulose derivatives, such as hydroxymethylcellulose, hydroxyethylcellulose, hydroxypropylcellulose, methylcellulose, and ethylcellulose, sodium polyacrylate, polyvinylpyrrolidone, acrylamide-acrylic acid ester copolymers, acrylamide-acrylic acid ester-methacrylic acid ester copolymers, styrene-maleic anhydride copolymers, isobutylene-maleic anhydride copolymers, casein, gelatin, and derivatives thereof; emulsions, such as polyvinyl acetate, polyurethane, polyacrylic acid, polyacrylic acid ester, vinyl chloride-vinyl acetate copolymers, polybutyl methacrylate, and ethylene-vinyl acetate copolymers; latexes of water-insoluble polymers, such as styrene-butadiene copolymers and styrene-butadiene-acrylic copolymers; and the like. Of these, polyvinyl alcohol, latexes, and the like are preferred. The content of the binder can be selected from a wide range, and is typically preferably about 7 to 60 mass%, and more preferably about 10 to 45 mass%, based on the total solids content of the light-scattering layer.

The presence of a crosslinking agent in the light-scattering layer can improve water resistance of the light-scattering layer. Examples of crosslinking agents include aldehyde compounds, such as glyoxal; polyamine compounds, such as polyethyleneimine; epoxy compounds, polyamide resins, melamine resins, glyoxylic acid salts, dimethylolurea compounds, aziridine compounds, block isocyanate compounds; inorganic compounds, such as ammonium persulfate, ferric chloride, magnesium chloride, soda tetraborate, and potassium tetraborate; boric acid, boric acid triesters, boron polymers, hydrazide compounds, glyoxylic acid salts, and the like. These may be used singly or in a combination of two or more.

Metal soaps may be used as lubricants. Examples of metal soaps include polyvalent metal salts of higher fatty acids, such as zinc stearate, aluminum stearate, calcium stearate, and zinc oleate.

The light-scattering layer is formed on a colored surface, for example, by dispersing in water as a dispersion medium a clarifying agent, together with a water-soluble synthetic polymer compound, such as polyacrylamide, polyvinyl pyrrolidone, polyvinyl alcohol, methylcellulose, or a styrene-maleic anhydride copolymer salt, and other additives such as a surfactant, with at least one of various stirrers or wet pulverizers, such as a ball mill, a co-ball mill, an attritor, or a vertical or horizontal sand mill, to form a dispersion; reducing the average particle diameter of the dispersion to 2 µm or less; mixing the resulting dispersion with hollow polymer particles, and optionally further mixing therewith a binder, non-hollow polymer particles, an auxiliary agent, and the like to prepare a coating liquid for a light-scattering layer; applying the coating liquid for a light-scattering layer to the colored surface; and then drying. The coated amount of the coating liquid for a light-scattering layer is not particularly limited, and the coated amount is preferably about 1 to 15 g/m², more preferably about 2 to 10 g/m², even more preferably about 2.5 to 8 g/m², and particularly preferably about 3 to 5 g/m², in terms of the coated amount after drying. The light-scattering layer may be formed as two or more separate layers if necessary, and the composition and coated amount of each layer may be the same or different.

### Protective Layer

The heat-sensitive recording material can comprise a protective layer on the light-scattering layer as necessary. The protective layer preferably contains a pigment and a binder. The protective layer preferably further contains a lubricant, such as polyolefin wax or zinc stearate, for the purpose of preventing the layer from sticking to the thermal head. The protective layer can also contain a UV absorber. When a glossy protective layer is formed, the obtained product can have increased added value.

The pigment contained in the protective layer is not particularly limited. Examples include inorganic pigments, such as amorphous silica, kaolin, clay, light calcium carbonate, heavy calcium carbonate, calcined kaolin, titanium oxide, magnesium carbonate, aluminum hydroxide, colloidal silica, and synthetic layered mica; plastic pigments, such as urea-formalin resin fillers; and the like.

The binder contained in the protective layer is not particularly limited, and an aqueous binder selected from water-soluble binders and water-dispersible binders can be used. The binder can be appropriately selected from those that can be used for the light-scattering layer. Of these, various modified polyvinyl alcohols, such as acetoacetyl-modified polyvinyl alcohol, carboxy-modified polyvinyl alcohol, and diacetone-modified polyvinyl alcohol, can be more preferably used.

The protective layer is formed on the light-scattering layer, for example, by mixing a pigment and a binder optionally with an auxiliary agent and the like using water as a dispersion medium to prepare a coating liquid for a protective layer, applying the coating liquid to the light-scattering layer, and then drying. The coated amount of the coating liquid for a protective layer is not particularly limited, and is preferably about 0.3 to 15 g/m², more preferably about 0.3 to 10 g/m², even more preferably about 0.5 to 8 g/m², particularly preferably about 1 to 8 g/m², and further particularly preferably about 1 to 5 g/m², in terms of dry mass. The protective layer may be formed as two or more separate layers if necessary, and the composition and coated amount of each layer may be the same or different.

### Other Layers

In the present invention, the heat-sensitive recording material preferably comprises an adhesive layer on at least one surface of the support. This can increase the added value of the heat-sensitive recording material. For example, adhesive paper, remoistening adhesive paper, or delayed tack paper can be formed as the adhesive layer by subjecting one surface of the support to coating with, for example, an adhesive, such as an adhesive, a remoistening adhesive, or a delayed tack adhesive. Recording paper capable of two-sided recording can also be formed by imparting to the surface of the support opposite to the light-scattering layer a function as heat transfer paper, ink jet recording paper, carbon-free paper, electrostatic recording paper, or xerography paper. Of course, the heat-sensitive recording material can be formed into a two-side heat-sensitive recording material. A back layer can also be provided to inhibit oil and plasticizer permeation from the back side of the heat-sensitive recording material, or for curl control and antistatic purposes. The heat-sensitive recording material can also be formed into linerless labels that do not require release paper by forming a silicone-containing release layer on the protective layer and applying an adhesive to the one side.

### Heat-sensitive Recording Material

The heat-sensitive recording material can be produced by forming each layer described above on the support. Any known coating method, such as an air knife method, a blade method, a gravure method, a roll coater method, a spray method, a dip method, a bar method, a curtain method, a slot-die method, a slide die method, and an extrusion method, can be used as the method for forming each layer described above on the support. The individual coating compositions may be applied in such a manner that a first coating composition is applied and dried and then a second coating composition is applied and dried to form one layer after another, or the same coating composition may be applied separately to form two or more layers. Further, simultaneous multilayer coating may also be performed, in which individual coating compositions are applied all at once to form two or more layers simultaneously. In any stage after each layer is formed or after all layers are formed, the layer may be subjected to a smoothing treatment by a known method, such as supercalendering or soft calendering.

### Examples

Below, the present invention is described in more detail with reference to Examples. However, the present invention is not limited to these Examples. In the Examples, "parts" and "%" represent "parts by mass" and "mass%" unless otherwise specified. The particle diameters were measured with a SALD2200 laser diffraction particle diameter distribution analyzer (produced by Shimadzu Corporation). "Average particle diameter" as used herein refers to a median diameter (D50).

### Example 1

### (1) Preparation of Coating Liquid for Colored Layer

A coating liquid for a colored layer was obtained by mixing a composition comprising 169.8 parts of a plastic hollow particle dispersion (trade name: Ropaque SN-1055, hollow ratio: 55%, average particle diameter: 1.0 µm, produced by The Dow Chemical Company, solids concentration: 26.5 mass%), 40.0 parts of a 50% aqueous dispersion (average particle diameter: 0.6 µm) of calcined kaolin (trade name: Ansilex 93, produced by BASF), 41.7 parts of a styrene-butadiene-based latex (trade name: L-1571, produced by Asahi Kasei Chemicals Corporation, solids concentration: 48 mass%), 50.0 parts of a 10% aqueous solution of oxidized starch, 26.3 parts of a carbon black dispersion (trade name: Black FLTB, produced by Dainichiseika Color & Chemicals Mfg. Co., Ltd., solids concentration: 38.0%), and 20 parts of water.

### (2) Preparation of Clarifying Agent Dispersion

12.5 parts of stearic acid amide, 12.5 parts of palmitic acid amide, 25.0 parts of a 10% aqueous solution of partially saponified PVA (trade name: Kuraray Poval 5-88, produced by Kuraray Co., Ltd.), and 50 parts of water were mixed. The resulting mixture was pulverized with a sand mill (produced by Aimex Co., Ltd.; a sand grinder) to a median diameter measured with a SALD2200 laser diffraction particle diameter distribution analyzer (produced by Shimadzu Corporation) of 1.0 µm, thereby obtaining a clarifying agent dispersion.

### (3) Preparation of Coating Liquid for Light-scattering Layer

A coating liquid for a light-scattering layer was obtained by mixing a composition comprising 33.9 parts of a plastic hollow particle dispersion (trade name: Ropaque Ultra-E, hollow ratio: 44%, average particle diameter: 0.4 µm, produced by The Dow Chemical Company, solids concentration: 29.5 mass%), 140.0 parts of the clarifying agent dispersion obtained in (2), 415.0 parts of a 10.0% aqueous solution of fully saponified PVA (trade name: Kuraray Poval 11-98, produced by Kuraray Co., Ltd.), 27.8 parts of an aqueous dispersion of zinc stearate (trade name: Hidorin Z-9-36, produced by Chukyo Yushi Co., Ltd., solids concentration: 36.0%), and 50.0 parts of water.

### (4) Preparation of Heat-sensitive Recording Material

The coating liquid for a colored layer and the coating liquid for a light-scattering layer were applied to one surface of high-quality paper having a basis weight of 42 g/m² and dried so that the coated amounts were 6.0 g/m² and 3.5 g/m², respectively, in terms of the coated amounts after drying to form a colored layer and a light-scattering layer in this order, thereby obtaining a heat-sensitive recording material.

### Example 2

A heat-sensitive recording material was obtained in the same manner as in Example 1, except that in the preparation of the coating liquid for a light-scattering layer in Example 1, the amount of the plastic hollow particle dispersion (trade name: Ropaque Ultra-E, hollow ratio: 44%, average particle diameter: 0.4 µm, produced by The Dow Chemical Company, solids concentration: 29.5 mass%) was changed from 33.9 parts to 67.8 parts, and the amount of the 10.0% aqueous solution of fully saponified PVA (trade name: Kuraray Poval 11-98, produced by Kuraray Co., Ltd.) was changed from 415.0 parts to 315.0 parts.

### Example 3

A heat-sensitive recording material was obtained in the same manner as in Example 1, except that in the preparation of the coating liquid for a light-scattering layer in Example 1, the amount of the plastic hollow particle dispersion (trade name: Ropaque Ultra-E, hollow ratio: 44%, average particle diameter: 0.4 µm, produced by The Dow Chemical Company, solids concentration: 29.5 mass%) was changed from 33.9 parts to 101.7 parts, and the amount of the 10.0% aqueous solution of fully saponified PVA (trade name: Kuraray Poval 11-98, produced by Kuraray Co., Ltd.) was changed from 415.0 parts to 215.0 parts.

### Example 4

A heat-sensitive recording material was obtained in the same manner as in Example 1, except that in the preparation of the coating liquid for a light-scattering layer in Example 1, the amount of the plastic hollow particle dispersion (trade name: Ropaque Ultra-E, hollow ratio: 44%, average particle diameter: 0.4 µm, produced by The Dow Chemical Company, solids concentration: 29.5 mass%) was changed from 33.9 parts to 118.6 parts, and the amount of the 10.0% aqueous solution of fully saponified PVA (trade name: Kuraray Poval 11-98, produced by Kuraray Co., Ltd.) was changed from 415.0 parts to 165.0 parts.

### Example 5

A heat-sensitive recording material was obtained in the same manner as in Example 1, except that in the preparation of the coating liquid for a light-scattering layer in Example 1, the amount of the clarifying agent dispersion obtained in (2) was changed from 140.0 parts to 80.0 parts, and the amount of the 10.0% aqueous solution of fully saponified PVA (trade name: Kuraray Poval 11-98, produced by Kuraray Co., Ltd.) was changed from 415.0 parts to 580.0 parts.

### Example 6

A heat-sensitive recording material was obtained in the same manner as in Example 1, except that in the preparation of the coating liquid for a light-scattering layer in Example 1, the amount of the clarifying agent dispersion obtained in (2) was changed from 140.0 parts to 60.0 parts, and the amount of the 10.0% aqueous solution of fully saponified PVA (trade name: Kuraray Poval 11-98, produced by Kuraray Co., Ltd.) was changed from 415.0 parts to 635.0 parts.

### Example 7

A heat-sensitive recording material was obtained in the same manner as in Example 1, except that in the preparation of the coating liquid for a light-scattering layer in Example 1, the coating liquid for a light-scattering layer was obtained by mixing a composition comprising 101.7 parts of a plastic hollow particle dispersion (trade name: Ropaque Ultra-E, hollow ratio: 44%, average particle diameter: 0.4 µm, produced by The Dow Chemical Company, solids concentration: 29.5 mass%), 18.9 parts of a plastic dense particle dispersion (trade name: Glossdell 130S, average particle diameter: 0.7 µm, produced by Mitsui Chemicals, Inc., solids concentration: 53.0%), 120.0 parts of the clarifying agent dispersion obtained in (2), 170.0 parts of a 10.0% aqueous solution of fully saponified PVA (trade name: Kuraray Poval 11-98, produced by Kuraray Co., Ltd.), 27.8 parts of an aqueous dispersion of zinc stearate (trade name: Hidorin Z-9-36, produced by Chukyo Yushi Co., Ltd., solids concentration: 36.0%), and 50.0 parts of water.

### Example 8

A heat-sensitive recording material was obtained in the same manner as in Example 7, except that in the preparation of the coating liquid for a light-scattering layer in Example 7, the amount of the plastic dense particle dispersion (trade name: Glossdell 130S, average particle diameter: 0.7 µm, produced by Mitsui Chemicals, Inc., solids concentration: 53.0%) was changed from 18.9 parts to 37.7 parts, and the amount of the 10.0% aqueous solution of fully saponified PVA (trade name: Kuraray Poval 11-98, produced by Kuraray Co., Ltd.) was changed from 170.0 parts to 70.0 parts.

### Example 9

A heat-sensitive recording material was obtained in the same manner as in Example 1, except that in the preparation of the coating liquid for a light-scattering layer in Example 1, the coating liquid for a light-scattering layer was obtained by mixing a composition comprising 33.9 parts of a plastic hollow particle dispersion (trade name: Ropaque Ultra-E, hollow ratio: 44%, average particle diameter: 0.4 µm, produced by The Dow Chemical Company, solids concentration: 29.5 mass%), 84.9 parts of a plastic dense particle dispersion (trade name: Glossdell 130S, average particle diameter: 0.7 µm, produced by Mitsui Chemicals, Inc., solids concentration: 53.0%), 120.0 parts of the clarifying agent dispersion obtained in (2), 40.0 parts of a 10.0% aqueous solution of fully saponified PVA (trade name: Kuraray Poval 11-98, produced by Kuraray Co., Ltd.), 22.2 parts of an aqueous dispersion of zinc stearate (trade name: Hidorin Z-9-36, produced by Chukyo Yushi Co., Ltd., solids concentration: 36.0%), and 50.0 parts of water.

### Example 10

### (5) Preparation of Clarifying Agent Dispersion

44 parts of oxalic acid-di-p-methylbenzyl ester, 44 parts of a 10% aqueous solution of partially saponified PVA (trade name: Kuraray Poval 5-88, produced by Kuraray Co., Ltd.), and 12 parts of water were mixed. The resulting mixture was pulverized with a sand mill (produced by Aimex Co., Ltd.; a sand grinder) to a median diameter measured with a SALD2200 laser diffraction particle diameter distribution analyzer (produced by Shimadzu Corporation) of 1.0 µm, thereby obtaining a clarifying agent dispersion.

A heat-sensitive recording material was obtained in the same manner as in Example 1, except that in the preparation of the coating liquid for a light-scattering layer in Example 1, the coating liquid for a light-scattering layer was obtained by mixing a composition comprising 101.7 parts of a plastic hollow particle dispersion (trade name: Ropaque Ultra-E, hollow ratio: 44%, average particle diameter: 0.4 µm, produced by The Dow Chemical Company, solids concentration: 29.5 mass%), 37.7 parts of a plastic dense particle dispersion (trade name: Glossdell 130S, average particle diameter: 0.7 µm, produced by Mitsui Chemicals, Inc., solids concentration: 53.0%), 40.0 parts of the clarifying agent dispersion obtained in (2), 45.5 parts of the clarifying agent dispersion obtained in (5) (solids concentration: 44.0%), 70.0 parts of a 10.0% aqueous solution of fully saponified PVA (trade name: Kuraray Poval 11-98, produced by Kuraray Co., Ltd.), 27.8 parts of an aqueous dispersion of zinc stearate (trade name: Hidorin Z-9-36, produced by Chukyo Yushi Co., Ltd., solids concentration: 36.0%), and 50.0 parts of water.

### Example 11

A heat-sensitive recording material was obtained in the same manner as in Example 10, except that in "(5) Preparation of Clarifying Agent Dispersion" in Example 10, oxalic acid-di-p-methylbenzyl ester was changed to oxalic acid-di-p-chlorobenzyl ester.

### Example 12

A heat-sensitive recording material was obtained in the same manner as in Example 10, except that in "(5) Preparation of Clarifying Agent Dispersion" in Example 10, oxalic acid-di-p-methylbenzyl ester was changed to 1,2-bis(phenoxymethyl)benzene.

### Example 13

A heat-sensitive recording material was obtained in the same manner as in Example 8, except that in the preparation of the coating liquid for a light-scattering layer in Example 8, 57.1 parts of a plastic dense particle dispersion (trade name: Glossdell 204S, average particle diameter: 0.2 µm, produced by Mitsui Chemicals, Inc., solids concentration: 35.0%) was used instead of 37.7 parts of the plastic dense particle dispersion (trade name: Glossdell 130S, average particle diameter: 0.7 µm, produced by Mitsui Chemicals, Inc., solids concentration: 53.0%).

### Example 14

A heat-sensitive recording material was obtained in the same manner as in Example 8, except that in the preparation of the coating liquid for a light-scattering layer in Example 8, 75.5 parts of a plastic dense particle dispersion (trade name: Saivinol PG-5, average particle diameter: 3.0 µm, produced by Saiden Chemical Industry Co., Ltd., solids concentration: 26.5%) was used instead of 37.7 parts of the plastic dense particle dispersion (trade name: Glossdell 130S, produced by Mitsui Chemicals, Inc., solids concentration: 53.0%).

### Example 15

A heat-sensitive recording material was obtained in the same manner as in Example 3, except that in the preparation of the clarifying agent dispersion in Example 3, the amount of stearic acid amide was changed from 12.5 parts to 25.0 parts, and the amount of palmitic acid amide was changed from 12.5 parts to 0 parts.

### Example 16

A heat-sensitive recording material was obtained in the same manner as in Example 3, except that in the preparation of the clarifying agent dispersion in Example 3, the amount of stearic acid amide was changed from 12.5 parts to 0 parts, and the amount of palmitic acid amide was changed from 12.5 parts to 25.0 parts.

### Comparative Example 1

A heat-sensitive recording material was obtained in the same manner as in Example 1, except that in the preparation of the coating liquid for a light-scattering layer in Example 1, the amount of the plastic hollow particle dispersion (trade name: Ropaque Ultra-E, hollow ratio: 44%, average particle diameter: 0.4 µm, produced by The Dow Chemical Company, solids concentration: 29.5 mass%) was changed from 33.9 parts to 16.9 parts, the amount of the clarifying agent dispersion obtained in (2) was changed from 140.0 to 120.0 parts, and the amount of the 10.0% aqueous solution of fully saponified PVA (trade name: Kuraray Poval 11-98, produced by Kuraray Co., Ltd.) was changed from 415.0 parts to 520.0 parts.

### Comparative Example 2

A heat-sensitive recording material was obtained in the same manner as in Example 8, except that in the preparation of the coating liquid for a light-scattering layer in Example 8, the amount of the plastic hollow particle dispersion (trade name: Ropaque Ultra-E, hollow ratio: 44%, average particle diameter: 0.4 µm, produced by The Dow Chemical Company, solids concentration: 29.5 mass%) was changed from 101.7 parts to 0 parts, and the amount of the 10.0% aqueous solution of fully saponified PVA (trade name: Kuraray Poval 11-98, produced by Kuraray Co., Ltd.) was changed from 70.0 parts to 370.0 parts.

### Comparative Example 3

A heat-sensitive recording material was obtained in the same manner as in Example 1, except that in the preparation of the coating liquid for a light-scattering layer in Example 1, the amount of the plastic hollow particle dispersion (trade name: Ropaque Ultra-E, hollow ratio: 44%, average particle diameter: 0.4 µm, produced by The Dow Chemical Company, solids concentration: 29.5 mass%) was changed from 33.9 parts to 135.6 parts, the amount of the clarifying agent dispersion obtained in (2) was changed from 140.0 parts to 160.0 parts, and the amount of the 10.0% aqueous solution of fully saponified PVA (trade name: Kuraray Poval 11-98, produced by Kuraray Co., Ltd.) was changed from 415.0 parts to 60.0 parts.

### Comparative Example 4

A heat-sensitive recording material was obtained in the same manner as in Comparative Example 3, except that in the preparation of the coating liquid for a light-scattering layer in Comparative Example 3, the amount of the clarifying agent dispersion obtained in (2) was changed from 160.0 parts to 140.0 parts, and the amount of the 10.0% aqueous solution of fully saponified PVA (trade name: Kuraray Poval 11-98, produced by Kuraray Co., Ltd.) was changed from 60.0 parts to 115.0 parts.

### Comparative Example 5

A heat-sensitive recording material was obtained in the same manner as in Example 10, except that in "(5) Preparation of Clarifying Agent Dispersion" in Example 10, oxalic acid-di-p-methylbenzyl ester was changed to 1,2-bis(3-methylphenoxy)ethane.

### Comparative Example 6

### (6) Preparation of Clarifying Agent Dispersion

44 parts of oxalic acid-di-p-methylbenzyl ester, 44 parts of a 10% aqueous solution of partially saponified PVA (trade name: Kuraray Poval 5-88, produced by Kuraray Co., Ltd.), and 12 parts of water were mixed. The resulting mixture was pulverized with a sand mill (produced by Aimex Co., Ltd.; a sand grinder) to a median diameter measured with a SALD2200 laser diffraction particle diameter distribution analyzer (produced by Shimadzu Corporation) of 1.0 µm, thereby obtaining a clarifying agent dispersion.

A heat-sensitive recording material was obtained in the same manner as in Example 10, except that in the preparation of the coating liquid for a light-scattering layer in Example 10, the amount of the clarifying agent dispersion obtained in (2) was changed from 40.0 parts to 0 parts, and that 68.2 parts of the amount of the clarifying agent dispersion obtained in (6) (solids concentration: 44.0%) was used instead of 45.5 parts of the clarifying agent dispersion obtained in (5).

### Comparative Example 7

A heat-sensitive recording material was obtained in the same manner as in Comparative Example 5, except that in the preparation of the coating liquid for a light-scattering layer in Comparative Example 5, the amount of the plastic hollow particle dispersion (trade name: Ropaque Ultra-E, hollow ratio: 44%, average particle diameter: 0.4 µm, produced by The Dow Chemical Company, solids concentration: 29.5 mass%) was changed from 101.7 parts to 27.1 parts, and the amount of the 10.0% aqueous solution of fully saponified PVA (trade name: Kuraray Poval 11-98, produced by Kuraray Co., Ltd.) was changed from 70.0 parts to 290.0 parts.

The Examples and Comparative Examples above were evaluated according to the following methods. Tables 1 and 2 show the results.

### ISO Whiteness

Four sheets of each of the obtained heat-sensitive recording materials were stacked, and the ISO whiteness was measured with an SC-WT color meter (produced by Suga Test Instruments Co., Ltd.). The ISO whiteness is required to be 35 or more, preferably 40 or more, and more preferably 50 or more.

### Print Density

Recording was performed on each heat-sensitive recording material at an applied energy of 0.24 mJ/dot by using a thermal recording tester (trade name: TH-PMD, produced by Ohkura Electric Co., Ltd.). The obtained printed portion was measured with a Macbeth densitometer (RD-914, produced by Macbeth Co., Ltd.) in visual mode. A larger value indicates a higher print density. The recording density is required to be 1.25 or more, preferably 1.30 or more, and more preferably 1.40 or more.

### Oil Resistance

One milliliter of salad oil was dropped onto a blank portion of each heat-sensitive recording material and spread evenly with a cloth, and the resulting products were allowed to stand at room temperature for 24 hours. The background density was then measured with a Macbeth densitometer (RD-914, produced by Macbeth Co., Ltd.) in visual mode. The background density is required to be 0.90 or less, and preferably 0.80 or less.

### Printability

Solid black printing (18 cm) was performed 6 times at an applied energy of 3 A by using a thermal printer (trade name: L'esprit T-408v-ex, produced by Sato Corporation), and the amount of head residue adhering to the thermal head was evaluated according to the following criteria.
A: A very small amount of head residue was observed, and there was no problem in practical use.
B: Adhesion of head residue was observed, but there was no problem in practical use.
C: A large amount of head residue was observed, and printing problems occurred before printing was performed 6 times; there was a problem in practical use.

**Table 1**

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|---|
| Hollow polymer particles | | | | | | | | | | | | | | |
| Ropaque Ultra-E | | 10 | 20 | 30 | 35 | 10 | 10 | 30 | 30 | 10 | 30 | 30 | 30 | 30 |
| Non-hollow polymer particles | | | | | | | | | | | | | | |
| Glossdell 130S | 0.7 µm | | | | | | | 10 | 20 | 45 | 20 | 20 | 20 | |
| Glossdell 204S | 0.2 µm | | | | | | | | | | | | | 20 |
| Saivinol PG-5 | 3.0 µm | | | | | | | | | | | | | |
| Clarifying agent | | | | | | | | | | | | | | |
| Stearic acid amide | | 175 | 175 | 175 | 175 | 10 | 7.5 | 15 | 15 | 15 | 5 | 5 | 5 | 15 |
| Palmitic acid amide | | 175 | 175 | 175 | 175 | 10 | 7.5 | 15 | 15 | 15 | 5 | 5 | 5 | 15 |
| Oxalic acid-di-p-methylbenzyl ester | | | | | | | | | | | 20 | | | |
| Oxalic acid-di-p-chlorobenzyl ester | | | | | | | | | | | | 20 | | |
| 1,2-Bis(phenoxymethyl)benzene | | | | | | | | | | | | | 20 | |
| 1,2-Bis(3-methylphenoxy)ethane | | | | | | | | | | | | | | |
| Binder | | 45 | 35 | 25 | 20 | 60 | 65 | 20 | 10 | 7 | 10 | 10 | 10 | 10 |
| Wax | | 10 | 10 | 10 | 10 | 10 | 10 | 10 | 10 | 8 | 10 | 10 | 10 | 10 |
| Total | | 100 | 100 | 100 | 100 | 100 | 100 | 100 | 100 | 100 | 100 | 100 | 100 | 100 |
| ISO whiteness | | 36 | 41 | 45 | 52 | 37 | 37 | 51 | 55 | 53 | 55 | 55 | 55 | 47 |
| Print density | | 1.55 | 1.49 | 1.44 | 1.35 | 1.36 | 1.28 | 1.43 | 1.40 | 1.47 | 1.41 | 1.41 | 1.41 | 1.43 |
| Oil resistance | | 0.85 | 0.78 | 0.73 | 0.68 | 0.86 | 0.87 | 0.73 | 0.75 | 0.88 | 0.75 | 0.75 | 0.75 | 0.78 |
| Printability | | A | A | A | A | A | A | A | A | B | B | B | B | A |

**Table 2**

| | | Ex. 14 | Ex. 15 | Ex. 16 | Comp. Ex. 1 | Comp. Ex. 2 | Comp. Ex 3 | Comp. Ex. 4 | Comp. Ex. 5 | Comp. Ex. 6 | Comp. Ex. 7 |
|---|---|---|---|---|---|---|---|---|---|---|---|
| Hollow polymer particles | | | | | | | | | | | |
| Ropaque Ultra-E | | 30 | 30 | 30 | 5 | | 40 | 40 | 30 | 30 | 8 |
| Non-hollow polymer particles | | | | | | | | | | | |
| Glossdell 130S | 0.7 µm | | | | | 20 | | | 20 | 20 | 20 |
| Glossdell 204S | 0.2 µm | | | | | | | | | | |
| Saivinol PG-5 | 3.0 µm | 20 | | | | | | | | | |
| Clarifying agent | | | | | | | | | | | |
| Stearic acid amide | | 15 | 35.0 | | 15 | 15 | 20 | 17.5 | 5 | | 5 |
| Palmitic acid amide | | 15 | | 35.0 | 15 | 15 | 20 | 17.5 | 5 | | 5 |
| Oxalic acid-di-p-methylbenzyl ester | | | | | | | | | | 30 | |
| Oxalic acid-di-p-chlorobenzyl ester | | | | | | | | | | | |
| 1,2-Bis(phenoxymethyl)benzene | | | | | | | | | | | |
| 1,2-Bis(3-methylphenoxy)ethane | | | | | | | | | 20 | | 20 |
| Binder | | 10 | 25 | 25 | 55 | 40 | 10 | 15 | 10 | 10 | 32 |
| Wax | | 10 | 10 | 10 | 10 | 10 | 10 | 10 | 10 | 10 | 10 |
| Total | | 100 | 100 | 100 | 100 | 100 | 100 | 100 | 100 | 100 | 100 |
| ISO whiteness | | 49 | 45 | 45 | 32 | 38 | 58 | 59 | 55 | 55 | 33 |
| Print density | | 1.42 | 1.38 | 1.37 | 1.60 | 1.58 | 1.28 | 1.24 | 1.41 | 1.42 | 1.50 |
| Oil resistance | | 0.79 | 0.73 | 0.73 | 0.92 | 0.99 | 0.63 | 0.64 | 0.75 | 0.75 | 0.91 |
| Printability | | A | A | A | A | A | C | B | C | C | C |

## Claims

1. A heat-sensitive recording material comprising:
a support having at least one colored surface; and
a light-scattering layer on the colored surface,
wherein
the light-scattering layer contains hollow polymer particles and a clarifying agent, the content of the hollow polymer particles is 6 to 35 mass% based on the total solids content of the light-scattering layer, the content of the clarifying agent is 1 part by mass or more, on a solids basis, per part by mass of the hollow polymer particles, and the light-scattering layer is substantially free of a dye precursor and a color developer, and
wherein
A) the clarifying agent consists of a fatty acid amide, or
B) the clarifying agent comprises a combination of a fatty acid amide and at least one member selected from the group consisting of a compound represented by the following formula (1) and 1,2-bis(phenoxymethyl)benzene; 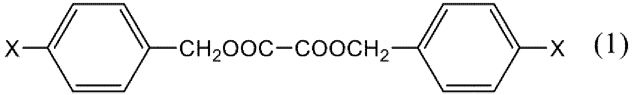
wherein in the formula, Xs are the same or different, and each represents CH₃ or Cl.

2. The heat-sensitive recording material according to claim 1, wherein the content of the clarifying agent is 20 to 35 mass% based on the total solids content of the light-scattering layer.

3. The heat-sensitive recording material according to claim 1 or 2, wherein the content of the hollow polymer particles is 20 to 30 mass% based on the total solids content of the light-scattering layer.

4. The heat-sensitive recording material according to claim 1 or 2, wherein the light-scattering layer further contains non-hollow polymer particles, and the content of the non-hollow polymer particles is 10 to 45 mass% based on the total solids content of the light-scattering layer.

5. The heat-sensitive recording material according to claim 4, wherein the non-hollow polymer particles have an average particle diameter of 0.4 to 2.0 µm.

6. The heat-sensitive recording material according to claim 1 or 2, wherein the fatty acid amide comprises at least one member selected from the group consisting of stearic acid amide and palmitic acid amide.
